# EUROPEAN PATENT APPLICATION

(11) **EP 4 765 327 A1**
(43) Date of publication of application: **24.06.2026**
(21) Application number: 24855787.8
(22) Date of filing: 19.08.2024
(51) Int. Cl.: H01M 10/613, H01M 10/615, H01M 10/617, H01M 10/6554, H01M 10/6556, H01M 10/6557

(54) **BATTERY CELL HEAT EXCHANGE SYSTEM AND POWER BATTERY**

(30) Priority: 18.08.2023 CN 202322238132 U; 18.08.2023 CN 202322243253 U
(71) Applicant: SVOLT Energy Technology Co., Ltd., Changzhou, Jiangsu 213200 (CN)
(72) Inventor: GAO, Yongkang, hangzhou, Jiangsu 213200 (CN); LUO, Chao, hangzhou, Jiangsu 213200 (CN)
(74) Representative: Michalski Hüttermann & Partner mbB
(86) International application number: PCT/CN2024/113219
(87) International publication number: WO 2025/040064

(57) **Abstract**

The present application relates to the technical field of batteries, and in particular, relates to a battery cell heat exchange system and a power battery. The battery cell heat exchange system includes: battery cell shells arranged in one-to-one correspondence with battery cells, where the battery cell shell has a heat exchange channel arranged on at least one side of the battery cell, for introducing a heat exchange medium, and along a flow direction of the heat exchange medium, two ends of the heat exchange channel are formed as a first inlet portion and a first outlet portion. By designing the heat exchange channel corresponding to at least one side of the battery cell on the battery cell shell, the heat exchange medium can flow on the at least one side of the battery cell, improving heat exchange effectiveness and efficiency.

## Description

### CROSS REFERENCE TO RELATED APPLICATION

The present application claims priority to Chinese Patent Applications No. 202322238132.5 entitled "BATTERY CELL HEAT EXCHANGE SYSTEM AND POWER BATTERY" and No. 202322243253.9 entitled "BATTERY CELL HEAT EXCHANGE SYSTEM AND POWER BATTERY", which are filed with the China National Intellectual Property Administration on August 18, 2023 and are incorporated herein by reference in entirety.

### TECHNICAL FIELD

The present application relates to the technical field of batteries, and in particular, relates to a battery cell heat exchange system and a power battery.

### BACKGROUND ART

Currently, power batteries are increasingly widely used, and high-power charging and discharging make the cooling of batteries more important. Conventional battery packs are mostly cooled with liquid-cooled plates, but this cooling method has the following disadvantages:
1. High cost: The liquid-cooled plates are manufactured by precision processes such as stamping and welding, resulting in high production cost. In addition, the liquid-cooled plates also need to be treated by various processes such as high-temperature resistance and corrosion resistance, making the production and manufacturing difficult and costly.
2. Complex manufacturing process: both the liquid-cooled plate and thermal adhesive need to be pasted on the surface of the battery and fully contact the surface of the battery cell, resulting in high mounting and positioning accuracy. During manufacturing, a large amount of manpower and material resources are required, resulting in low work efficiency.
3. Difficult maintenance: The liquid-cooled plate is connected to the battery cell through the thermal adhesive, and the liquid-cooled plate has relatively low strength and is mostly located at the bottom of the battery pack, so when subjected to impact from a foreign object, the liquid-cooled plate is prone to indentation or leakage, resulting in high maintenance costs and even scrapping of the entire cooling system.
4. Uneven heat dissipation: The heat dissipation effects of the liquid-cooled plate and the thermal adhesive are affected by manufacturing and mounting factors, resulting in uneven heat dissipation of the battery. In addition, the coolant gradually increases with the extension of a flow path, leading to different heat dissipation effects on different battery cells.
5. Environmental impact: The materials in the liquid-cooled plate and the thermal adhesive may pollute the environment to some extent.

### SUMMARY

In view of this, the objective of the present application is to provide a battery cell heat exchange system and a power battery, to solve the problems of uneven heat exchange, low heat exchange efficiency, high cost, etc. in existing devices for heat exchange of battery cells.

A first aspect of the present application provides a battery cell heat exchange system, applied to a plurality of stacked battery cells, where the battery cell heat exchange system includes:
battery cell shells arranged in one-to-one correspondence with the battery cells, where the battery cell shell has a heat exchange channel arranged on at least one side of the battery cell, for introducing a heat exchange medium, and along a flow direction of the heat exchange medium, two ends of the heat exchange channel are formed as a first inlet portion and a first outlet portion; and
a collection pipeline including a first pipeline and a second pipeline, where the first pipeline is connected to each first inlet portion, and the second pipeline is connected to each first outlet portion.

Preferably, the heat exchange channel is arranged on a large surface side of the corresponding battery cell of the battery cell shell.

Preferably, the heat exchange channel is provided on at least one side of the battery cell shell, the first inlet portion and the first outlet portion are respectively arranged at both ends of the battery cell shell in a length direction, and the heat exchange channel extends to both ends of the battery cell shell in a first direction.

Preferably, the battery cell heat exchange system further includes:
sealing elements arranged at the first inlet portion and the first outlet portion, where the sealing element is formed with a recessed communication cavity on a side facing the heat exchange channel, an outer wall of the sealing element is formed with a protruding connection portion that is connected to the communication cavity, and the collection pipeline is connected to the connection portion.

Preferably, the connection portion is formed as a tubular structure, and an extension direction of the connection portion is the same as a stacking direction of the plurality of battery cells.

Preferably, cover plates are provided on both sides of the battery cell, and the sealing element and the cover plate form a one-piece structure.

Preferably, the battery cell heat exchange system further includes:
a connecting component arranged between the two adjacent sealing elements located on the same side of the battery cell, where the connecting component is connected to the connection portion.

Preferably, one end of the first pipeline is formed as a medium inlet, and one end of the second pipeline is formed as a medium outlet;
the medium inlet and the medium outlet are arranged on the same side of the stacked battery cells, or the medium inlet and the medium outlet are respectively arranged on both sides of the stacked battery cells; and
the heat exchange medium is a gas or liquid cooling medium, or the heat exchange medium is a gas or liquid heating medium.

Preferably, a reinforcing member is provided inside the heat exchange channel, and the reinforcing member is arranged at an angle with a large surface of the battery cell.

Preferably, the battery cell heat exchange system further includes:
a thermal insulator arranged between the two adjacent battery cells; and/or
a heating element arranged between the two adjacent battery cells.

Preferably, each battery cell shell is provided with a heat exchange channel on at least one side in a first direction, for introducing a heat exchange medium; at least some heat exchange channels are arranged on sides close to terminal posts of the battery cells;
the first pipeline and the second pipeline are respectively formed as flow distributors, and any of the flow distributors is formed with flow distribution holes in one-to-one correspondence with the heat exchange channels; and
the two flow distributors are provided on a side of the battery cell shell with the heat exchange channel, and the two flow distributors are respectively located at the two ends of the heat exchange channel in the length direction, where one flow distributor is formed with a second inlet portion connected to each flow distribution hole on the flow distributor, for introducing the heat exchange medium; and the other flow distributor is formed with a second outlet portion connected to each flow distribution hole on the flow distributor, allowing the heat exchange medium to flow out.

Preferably, the heat exchange channel runs through both ends of the battery cell shell in the length direction; and the heat exchange channel extends to both ends of the battery cell shell in the stacking direction of the battery cells.

Preferably, the flow distributor is formed as a tubular structure extending along the stacking direction of the battery cells; and the plurality of flow distribution holes are spaced along a length direction of the flow distributor.

Preferably, a reinforcing portion is provided inside the flow distributor, and the reinforcing portion is formed as a plate-like structure that extends along the stacking direction of the battery cells and is arranged at an angle with the battery cell shell.

Preferably, the battery cell heat exchange system further includes:
a sealing element connected to an end of the flow distributor in an extension direction, where the sealing element is arranged at an end away from the second inlet portion or the second outlet portion; and
the second inlet portion and the second outlet portion are arranged on the same side of the battery cell, or the second inlet portion and the second outlet portion are arranged on both sides of the battery cell.

Preferably, the battery cell heat exchange system further includes:
two flow guides in sealing connection with the second inlet portion and the second outlet portion respectively, where a protruding flow guide tube is formed on a side of the flow guide that faces away from the second inlet portion or the second outlet portion, and the flow guide tube is connected to the flow distribution hole.

Preferably, the battery cell heat exchange system further includes:
connectors arranged at both ends of the heat exchange channel in the length direction, where the connector includes a sealing portion that conforms to an opening of the heat exchange channel, and a connection portion arranged on a side of the sealing portion that faces away from the heat exchange channel; the connection portion is formed as a tubular structure that runs through a main body of the sealing portion, and the connection portion can be connected to the flow distribution hole.

Preferably, the battery cell heat exchange system further includes:
an adapter formed as a flexible tubular structure, where two ends of the adapter are connected to the connection portion and the flow distribution hole respectively.

Preferably, the heat exchange medium is a liquid or gas cooling medium, or the heat exchange medium is a liquid or gas heating medium.

A second aspect of the present application provides a power battery, including the battery cell heat exchange system as described in any of the above technical solutions.

Compared with the prior art, the beneficial effects of the present application are as follows:
The battery cell heat exchange system of the present application has a simple structure and low cost. By designing the heat exchange channel corresponding to the side of the battery cell on the battery cell shell, the heat exchange medium can flow on the side of the battery cell, improving heat exchange effectiveness and efficiency. The battery cell shells are arranged in one-to-one correspondence with the battery cells, so that the heat exchange channel of each battery cell is independent. The heat exchange medium is divided into a plurality of branches from the first pipeline and enters different heat exchange channels, thereby overcoming the problem of gradually increasing coolant temperature in conventional liquid cooling methods, better maintaining the thermal balance between the battery cells, and improving the safety and thermal stability of a power battery.

In order to make the above objectives, features, and advantages of the present application more obvious and understandable, the following preferred embodiments are presented in detail with accompanying drawings.

### BRIEF DESCRIPTION OF DRAWINGS

To describe the technical solutions in the embodiments of the present application or in the prior art more clearly, the following briefly describes the accompanying drawings required for describing the specific embodiments or the prior art. Apparently, the drawings in the following description show merely some embodiments of the present application, and a person of ordinary skill in the art can still derive other drawings from these drawings without inventive efforts.
FIG. 1 is a schematic structural diagram of a battery cell shell in a battery cell heat exchange system provided in a first embodiment of the present application;
FIG. 2 is a schematic structural diagram of the battery cell shell in the battery cell heat exchange system provided in the first embodiment of the present application from another perspective;
FIG. 3 is a schematic structural diagram of a sealing element in the battery cell heat exchange system provided in the first embodiment of the present application;
FIG. 4 is a schematic structural diagram of the sealing element in the battery cell heat exchange system provided in the first embodiment of the present application from another perspective;
FIG. 5 is a schematic diagram of an assembly structure of the battery cell shell and the sealing element in the battery cell heat exchange system provided in the first embodiment of the present application;
FIG. 6 is a schematic diagram of an assembly structure of the battery cell shell and the sealing element in the battery cell heat exchange system provided in the first embodiment of the present application from another perspective;
FIG. 7 is a schematic structural diagram of a connecting component in the battery cell heat exchange system provided in the first embodiment of the present application;
FIG. 8 is a schematic structural diagram showing that the connecting component is assembled on the sealing element in the battery cell heat exchange system provided in the first embodiment of the present application;
FIG. 9 is a schematic structural diagram of the battery cell heat exchange system provided in the first embodiment of the present application;
FIG. 10 is a schematic diagram of a one-piece structure of the sealing element and a cover plate in the battery cell heat exchange system provided in the first embodiment of the present application;
FIG. 11 is a schematic structural diagram showing that the connecting component is assembled on the sealing element and cover plate of the one-piece structure in the battery cell heat exchange system provided in the first embodiment of the present application;
FIG. 12 is a schematic structural diagram showing that heat exchange channels are provided on both sides of the battery cell shell in the battery cell heat exchange system provided in the first embodiment of the present application;
FIG. 13 is a schematic structural diagram showing that reinforcing members are provided in the heat exchange channels located on both sides of the battery cell shell in the battery cell heat exchange system provided in the first embodiment of the present application;
FIG. 14 is a schematic structural diagram of a battery cell shell in a battery cell heat exchange system provided in a second embodiment of the present application;
FIG. 15 is a schematic structural diagram of the battery cell shell in the battery cell heat exchange system provided in the second embodiment of the present application from another perspective;
FIG. 16 is a schematic structural diagram of the battery cell heat exchange system provided in the second embodiment of the present application;
FIG. 17 is a schematic structural diagram of a flow distributor in the battery cell heat exchange system provided in the second embodiment of the present application;
FIG. 18 is a schematic structural diagram of the flow distributor in the battery cell heat exchange system provided in the second embodiment of the present application from another perspective;
FIG. 19 is a schematic diagram of an assembly structure of one end of the flow distributor and a sealing element in the battery cell heat exchange system provided in the second embodiment of the present application;
FIG. 20 is a schematic diagram of an assembly structure of the flow distributor and a flow guide in the battery cell heat exchange system provided in the second embodiment of the present application;
FIG. 21 is a schematic diagram of an assembly structure of the flow distributor, the flow guide, a connector, and an adapter in the battery cell heat exchange system provided in the second embodiment of the present application;
FIG. 22 is a schematic structural diagram of a connector in the battery cell heat exchange system provided in the second embodiment of the present application; and
FIG. 23 is a schematic diagram of an assembly structure of the battery cell shell and the connector in the battery cell heat exchange system provided in the second embodiment of the present application.

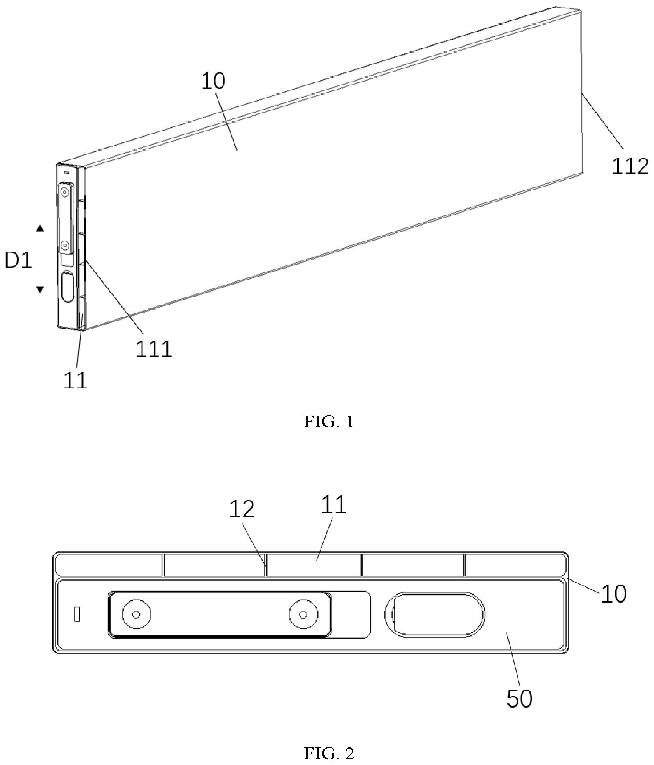

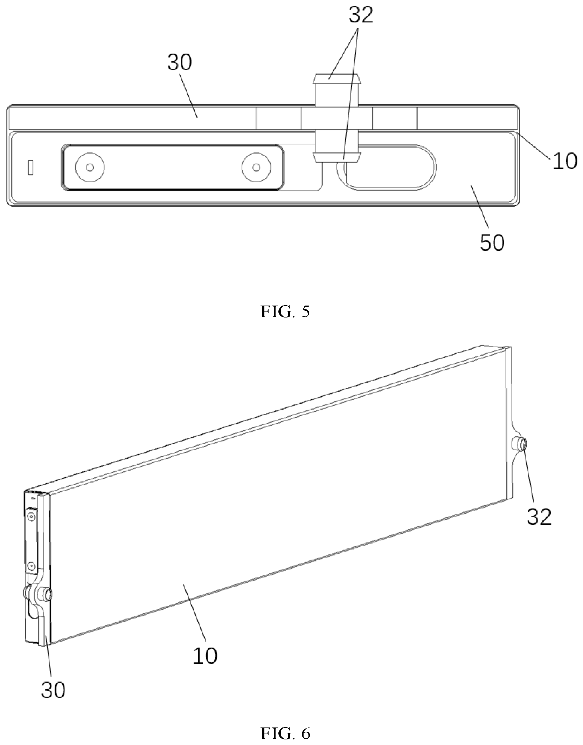

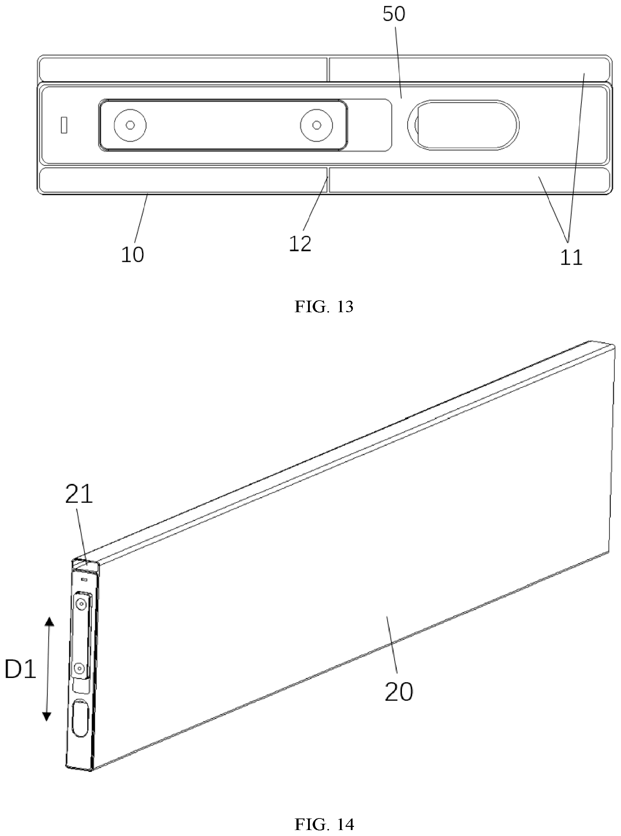

Reference numerals from FIG. 1 to FIG. 13: 10 - battery cell shell; 11 - heat exchange channel; 111 - inlet portion; 112 - outlet portion; 12 - reinforcing member; 21 - first pipeline; 211 - medium inlet; 22 - second pipeline; 221 - medium outlet; 30 - sealing element; 31 - communication cavity; 32 - connection portion; 40 - connecting component; 50 - cover plate; D1 - first direction;
Reference numerals from FIG. 14 to FIG. 23: 10 - flow distributor; 11 - inlet portion; 12 - outlet portion; 13 - flow distribution hole; 14 - reinforcing portion; 20 - battery cell shell; 21 - heat exchange channel; 30 - sealing element; 40 - flow guide; 41 - flow guide tube; 50 - connector; 51 - sealing portion; 52 - connection portion; 60 - adapter; D1 - first direction.

### DETAILED DESCRIPTION OF EMBODIMENTS

The following specific implementations are provided to help readers gain a comprehensive understanding of the methods, devices, and/or systems described herein. However, upon understanding the disclosure of the present application, various changes, modifications, and equivalents of the methods, devices, and/or systems described herein will be apparent. For example, the order of operations described herein is merely an example and is not limited to the order set forth herein. Other than operations that have to occur in a specific order, changes that will be apparent upon understanding the disclosure of the present application can be made. Moreover, in order to improve clarity and conciseness, descriptions of known features in the art may be omitted.

The features described herein can be implemented in different forms and should not be interpreted as being limited to the examples described herein. More exactly, the examples described herein have been provided merely to illustrate some of many feasible ways to implement the methods, devices, and/or systems described herein that will be apparent upon understanding the disclosure of the present application.

Throughout the entire description, one element (such as a layer, region, or substrate), when described as "on", "connected to", "bonded to", "above", or "covering" other element, may be directly "on", "connected to", "bonded to", "above", or "covering" the other element, or there may be one or more other elements between them. In contrast, when one element is described as "directly on", "directly connected to", "directly bonded to", "directly above", or "directly covering" other element, there may not be any other elements between them.

As used herein, the term "and/or" includes any one of the listed related items and any combination of any two or more items.

Although the terms such as "first", "second", and "third" can be used herein to describe various members, components, regions, layers, or portions, these members, components, regions, layers, or portions are not limited by these terms. More exactly, these terms are merely used to distinguish one member, component, region, layer, or portion from another member, component, region, layer, or portion. Therefore, without departing from the teachings of the examples, the first member, component, region, layer, or portion referred to in the examples described herein may also be referred to as the second member, component, region, layer, or portion.

For ease of description, the spatial relationship terms such as "on", "above", "under", and "below" may be used herein to describe the relationship between one element and another element as shown in the drawings. Such spatial relationship terms are intended to include not only the orientations depicted in the drawings, but also different orientations of a device during use or operation. For example, if the device in the drawings is flipped, the element described as being located "on" or "above" relative to another element will subsequently be located "under" or "below" relative to another element. Therefore, the term "on" includes two orientations based on the spatial orientation of the device: "on" and "under". The device may also be positioned in other ways (e.g., rotated 90 degrees or in other orientations), and corresponding explanations will be provided for the spatial relationship terms used herein.

The terms used herein are merely used to describe various examples and are not intended to limit the present disclosure. Unless the context clearly indicates otherwise, a singular form is also intended to include a plural form. The terms "include", "contain", and "have" list the stated feature, quantity, operations, member, element, and/or combination thereof that exist, but do not exclude the existence or addition of one or more other features, quantities, operations, members, elements, and/or combinations thereof.

Due to manufacturing technologies and/or tolerances, changes in shapes shown in the drawings may occur. Therefore, the examples described herein are not limited to the specific shapes shown in the drawings, but include changes in shapes that occur during manufacturing.

The features of the examples described herein may be combined in various ways that will be apparent upon understanding the disclosure of the present application. Furthermore, although the examples described herein have various constructions, other constructions are possible as will be apparent upon understanding the disclosure of the present application.

### First embodiment

The present application provides a battery cell heat exchange system, including a battery cell shell 10 and a collection pipeline.

Hereinafter, the specific structures of the above components of the battery cell heat exchange system according to this embodiment will be described.

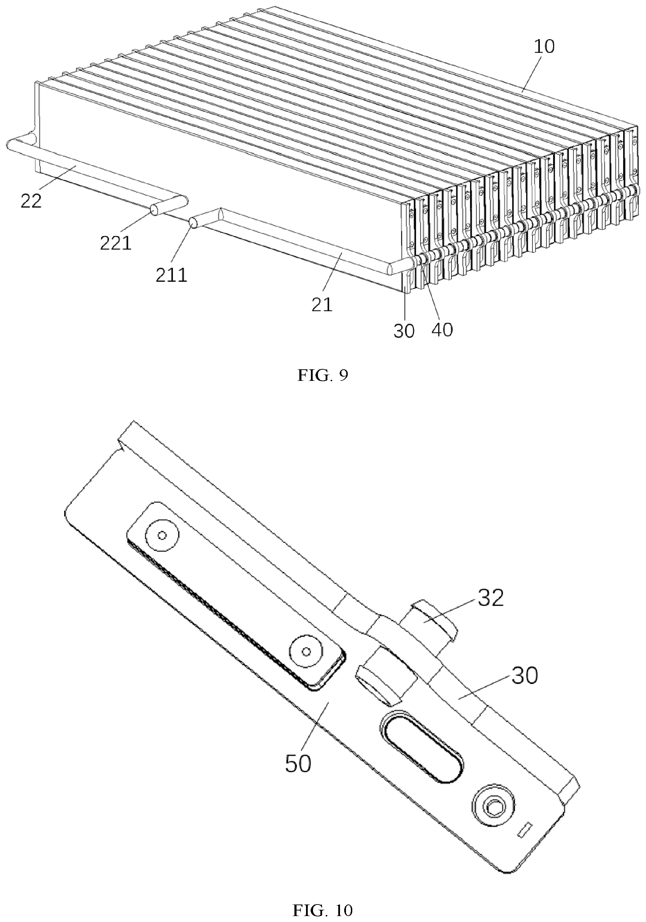

In this embodiment, as shown in FIG. 9, the battery cell heat exchange system is applied to a plurality of stacked battery cells. Along a battery cell stacking direction, the plurality of battery cells are sequentially connected in series to form a battery module.

In this embodiment, as shown in FIG. 1 and FIG. 2, the battery cell shells 10 are arranged in one-to-one correspondence with the battery cells, the battery cell shell 10 has a heat exchange channel 11 arranged on a large surface side of the battery cell, and the heat exchange channel 11 is used to introduce a heat exchange medium, so that the heat exchange medium can achieve convective heat exchange with the battery cell.

It should be noted that in this embodiment, the battery cell has a cubic structure, and the large surface of the battery cell is the surface with the largest area.

In a preferred implementation, as shown in FIG. 1 and FIG. 2, two ends of the heat exchange channel 11 (i.e., a first inlet portion 111 and a first outlet portion 112 hereinafter referred to) are respectively arranged at two ends of the battery cell shell 10 in a length direction, and the heat exchange channel 11 extends to two ends of the battery cell shell 10 in a first direction D1 (the first direction D1 is a height direction of the battery cell shell 10 from the perspective of FIG. 1), so that the heat exchange channel 11 can completely cover the large surface of the battery cell, thereby improving heat exchange efficiency and effectiveness.

In this embodiment, the heat exchange channel 11 is formed as a rectangular cavity structure, facilitating the stacking and sequential connection of a plurality of battery cells to form a structurally regular battery module. However, the structure of the heat exchange channel 11 is not limited to this, but can be designed and adjusted according to actual needs.

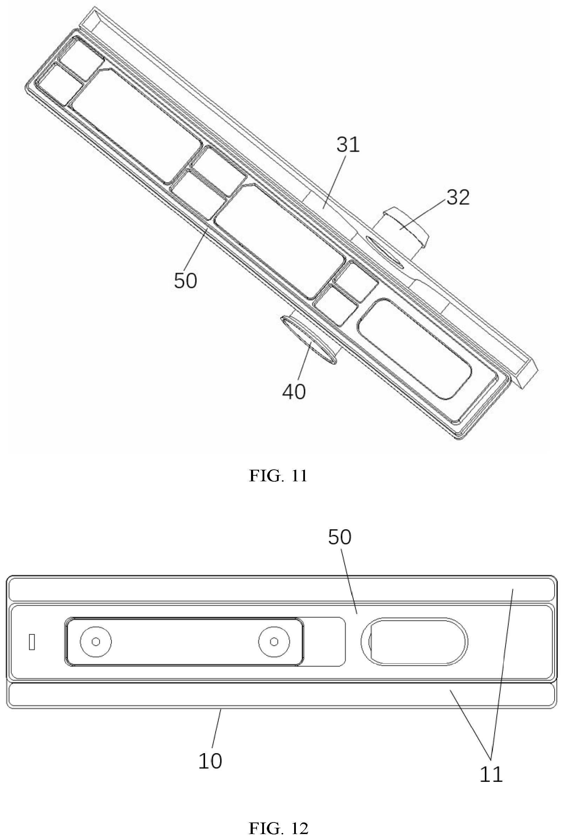

The battery cell has two large faces arranged opposite to each other. In this embodiment, at least one side of the battery cell shell 10 is provided with the heat exchange channel 11. Specifically, in one implementation, as shown in FIG. 1 and FIG. 2, one heat exchange channel 11 is provided on the battery cell shell 10. When a plurality of battery cells are stacked, the two heat exchange channels 11 on the two adjacent battery cell shells 10 are not adjacent, so that the heat exchange channels 11 on all the battery cell shells 10 are located on the same side of the battery cell shells 10. In another implementation, as shown in FIG. 12 and FIG. 13, two heat exchange channels 11 are provided on the battery cell shell 10, and the two heat exchange channels 11 are respectively arranged on two large surface sides of the battery cells, so that the heat exchange channels 11 on the two adjacent battery cell shells 10 can also be arranged adjacent to each other, thereby further improving the heat exchange efficiency and effectiveness.

It should be noted that even if the heat exchange channel 11 is provided only on the large surface of one side of the battery cell, after the plurality of battery cells are stacked, at least one heat exchange channel 11 can be ensured between the two adjacent battery cell shells 10. This ensures that the contact area between the heat exchange medium and the battery cell can reach more than 80% of the total surface area of the battery cell, thereby improving the heat exchange effectiveness and efficiency.

Furthermore, in this embodiment, as shown in FIG. 1, along a flow direction of the heat exchange medium, the two ends of the heat exchange channel 11 are formed as a first inlet portion 111 and a first outlet portion 112. The heat exchange medium enters the heat exchange channel 11 from the first inlet portion 111, exchanges heat with the battery cell, and then flows out from the first outlet portion 112. In a preferred implementation, the first inlet portion 111 and the first outlet portion 112 are arranged at both ends of the battery cell in the length direction, thereby prolonging the duration of the heat exchange medium flowing through the heat exchange channel 11, to ensure sufficient heat exchange between the heat exchange medium and the battery cell.

Furthermore, in this embodiment, as shown in FIGs. 1, 2, and 13, a reinforcing member 12 is provided inside the heat exchange channel 11, and the reinforcing member 12 is arranged at an angle with the large surface of the battery cell. Such design can reduce the impact of battery cell expansion deformation or foreign object collision on the structure of the heat exchange channel 11, thereby ensuring smooth flow of the heat exchange medium.

Specifically, in this embodiment, the reinforcing member 12 is formed as a plate-like structure arranged at an angle with the large surface of the battery cell, and the plate-like structure extends along the length direction of the heat exchange channel 11 to ensure reliable reinforcement. In this embodiment, the reinforcing member 12 is integrally formed with the battery shell, facilitating manufacturing and reducing costs.

More specifically, in this embodiment, one or more reinforcing members 12 may be designed. In the presence of a plurality of reinforcing members 12, the reinforcing members 12 are arranged at intervals along a width direction of the heat exchange channel 11 to form a plurality of heat exchange channels 11, so that the cross-sectional area of the heat exchange channels 11 separated by the reinforcing members 12 is reduced, thereby improving the deformation resistance of each heat exchange channel 11.

In this embodiment, as shown in FIG. 9, the collection pipeline includes a first pipeline 21 and a second pipeline 22, the first pipeline 21 is connected to each first inlet portion 111, and the second pipeline 22 is connected to each first outlet portion 112. One end of the first pipeline 21 is formed as a medium inlet 211, and one end of the second pipeline 22 is formed as a medium outlet 221. The heat exchange medium enters the first pipeline 21 from the medium inlet 211 and is distributed to each heat exchange channel 11 via the first pipeline 21 so that the heat exchange channel 11 exchanges heat with the corresponding battery cell, then the heat exchange medium flows to the second pipeline 22, and finally the heat exchange medium converges and flows out at the medium outlet 221. Such design can ensure reliable heat exchange of each battery cell without adding a large number of additional devices, the heat exchange reliability of each cell can be ensured, greatly improve heat exchange efficiency, and effectively reduce costs.

Furthermore, in this embodiment, as shown in FIG. 9, the medium inlet 211 and the medium outlet 221 are arranged on the same side of the stacked battery cells. In an optional implementation, the medium inlet 211 and the medium outlet 221 are respectively arranged on both sides of the stacked battery cells. The arrangement positions of the medium inlet 211 and the medium outlet 221 can be designed according to the structure of the battery pack and actual needs.

In one implementation of this embodiment, the heat exchange medium is a gas or liquid cooling medium, so that the battery cell heat exchange system is formed as a cooling system, which can effectively solve the problem of cell heat generation and avoid damage caused by the cell heat generation. However, in another implementation, the heat exchange medium is a gas or liquid heating medium, so that the battery cell heat exchange system is formed as a heating system to avoid the impact of low temperature environments (such as -20°C) on the battery life and performance.

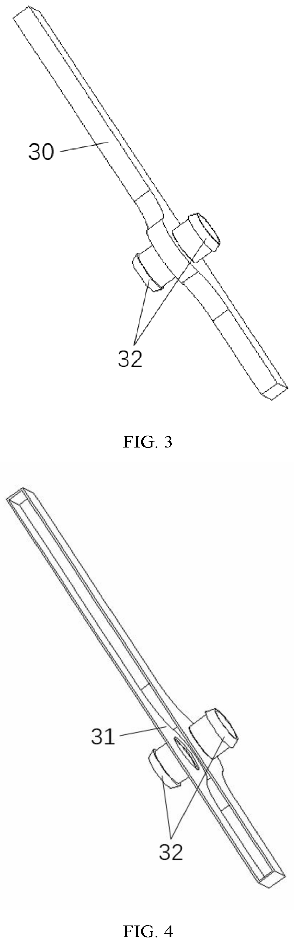

In order to avoid leakage of the heat exchange medium in the heat exchange channel 11, in this embodiment, as shown in FIG. 3 to FIG. 6, the battery cell heat exchange system further includes sealing elements 30 arranged at the first inlet portion 111 and the first outlet portion 112; the sealing element 30 is formed with a recessed communication cavity 31 on a side facing the heat exchange channel 11; when the reinforcing member 12 is provided inside the heat exchange channel 11, the communication cavity 31 is in communication with each heat exchange channel 11 separated by the reinforcing member 12; an outer wall of the sealing element 30 is formed with a protruding connection portion 32 that is connected to the communication cavity 31, and the collection pipeline is connected to the connection portion 32.

Specifically, in this embodiment, as shown in FIG. 3 to FIG. 6 and FIG. 9, the connection portion 32 is formed as a tubular structure, and an extension direction of the connection portion 32 is the same as the stacking direction of the plurality of battery cells, so that the positions of the connection portions 32 of the sealing elements 30 on the same side of the battery cells are the same. This allows the connection portions 32 of different sealing elements 30 to be arranged in a row along the stacking direction of the plurality of battery cells, facilitating the connection of the sealing elements with the collection pipeline.

It should be noted that in this embodiment, as shown in FIG. 9, along the flow direction of the heat exchange medium, except for the sealing element 30 arranged on the battery cell at the end, the remaining sealing elements 30 are provided with the connection portions 32 on both sides, so that each connection portion 32 can be connected to the adjacent connection portion 32 or the collection pipeline. The sealing element 30 arranged on the battery cell at the end has the connection portion 32 on only one side and a closed structure on the other side.

In this embodiment, the sealing element 30 is connected to the battery cell shell 10 by laser welding, to ensure sealing reliability. After welding, the surface of the sealing element 30 is insulated, to meet the requirements of battery cell use conditions. In addition, cover plates 50 are provided on both sides of the battery cell, and the cover plate 50 is provided with an explosion-proof valve and a terminal post. The protruding position of the connection portion 32 needs to avoid the positions where the explosion-proof valve and the terminal post are provided on the cover plate 50.

In a preferred implementation, as shown in FIG. 10 and FIG. 11, the sealing element 30 and the cover plate 50 form a one-piece structure, so that the sealing element 30 and the cover plate 50 can be connected to the battery cell shell 10 in the same welding step and uniformly insulated after welding, thereby simplifying the assembly process and improving assembly efficiency. It should be noted that the sealing element 30 may alternatively be arranged independently of the cover plate 50.

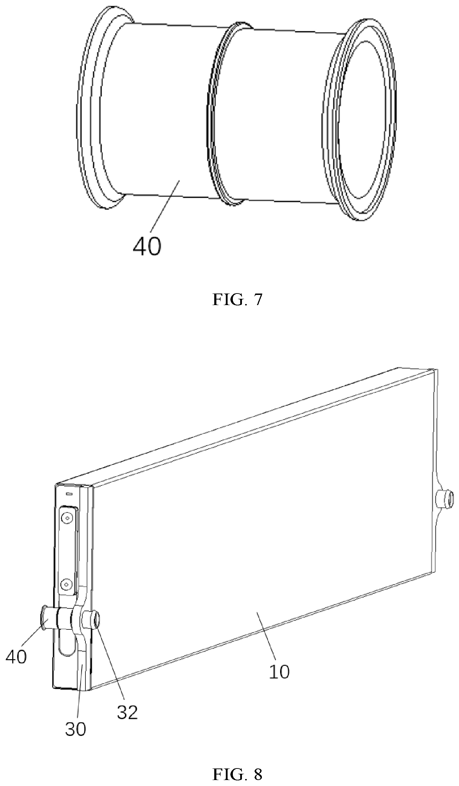

Furthermore, in order to improve the tightness of connection between two adjacent connection portions 32 on different sealing elements 30, in this embodiment, as shown in FIG. 7 to FIG. 9 and FIG. 11, the battery cell heat exchange system further includes a connecting component 40, the connecting component 40 may be a tubular connector, the connecting component 40 is arranged between the two adjacent sealing elements 30 located on the same side of the battery cell, an inner wall of the connecting component 40 is in sealing connection with an outer wall of the connection portion 32 to avoid leakage of the heat exchange medium from the space between the two connection portions 32 or between the connecting component 40 and the connection portion 32, and the adjacent connection portions 32 connected by the connecting component 40 can be quickly disassembled and assembled. It should be noted that the connecting component 40 is made of an insulating material or insulated.

In a preferred implementation, the connecting component 40 is connected to the connection portion 32 by insertion, which simplifies the assembly process and greatly shortens assembly time. In addition, when the battery cell is damaged, the both can be easily disassembled for quick replacement, without scrapping the entire system.

Moreover, in this embodiment, the battery cell heat exchange system further includes a thermal insulator arranged between the two adjacent battery cells. The thermal insulator may be attached to the battery cell shell 10 or formed as a plate-like structure sandwiched between the two battery cell shells 10. The thermal insulator may be made of an insulating material, such as aerogel felt or basalt fiber, to avoid heat exchange between the battery cells, so as to avoid the impact of one battery cell failure on other battery cells.

Furthermore, in this embodiment, the battery cell heat exchange system further includes a heating element arranged between the two adjacent battery cells. The heating element may be attached to the battery cell shell 10 or formed as a plate-like structure sandwiched between the two battery cell shells 10. The heating element may be made of a positive temperature coefficient (PTC) thermally sensitive resistive material, a carbon fiber heating film, or a thermo-electric pile (TEG), so that when the battery cell heat exchange system is formed as a heating system, the heating element can enhance the heating effect.

The battery cell heat exchange system provided according to the present application has the advantages of simple structure and low cost. By designing the heat exchange channel corresponding to the large surface side of the battery cell on the battery cell shell, the heat exchange medium can flow on the large surface of the battery cell. Such design can increase the heat exchange area, improve the heat exchange effect, enhance the heat exchange efficiency, and achieve a direct cooling effect to some extent, thereby overcoming the problems of difficult convective heat exchange and high viscosity of direct cooling coolants. The battery cell shells are arranged in one-to-one correspondence with the battery cells, so that the heat exchange channel of each battery cell is independent. The heat exchange medium is divided into a plurality of branches from the first pipeline and enters different heat exchange channels, thereby overcoming the problem of gradually increasing coolant temperature in conventional liquid cooling methods, and better maintaining a thermal balance between the battery cells. In addition, the battery cell heat exchange system is easy to assemble and has high flexibility. The quantity of battery cells can be increased or decreased according to the performance requirements of batteries, and the battery cells are easy to disassemble and replace.

In summary, the battery cell heat exchange system of the present application has a simple structure and low cost. By designing the heat exchange channel corresponding to the large surface side of the battery cell on the battery cell shell, the heat exchange medium can flow on the large surface of the battery cell, improving the heat exchange effectiveness and efficiency. The battery cell shells are arranged in one-to-one correspondence with the battery cells, so that the heat exchange channel of each battery cell is independent. The heat exchange medium is divided into a plurality of branches from the first pipeline and enters different heat exchange channels, thereby overcoming the problem of gradually increasing coolant temperature in conventional liquid cooling methods, better maintaining the thermal balance between the battery cells, and improving the safety and thermal stability of a power battery.

### Second embodiment

A first aspect of the present application provides a battery cell heat exchange system, including flow distributors 10 and battery cell shells 20.

Hereinafter, the specific structures of the above components of the battery cell heat exchange system according to this embodiment will be described.

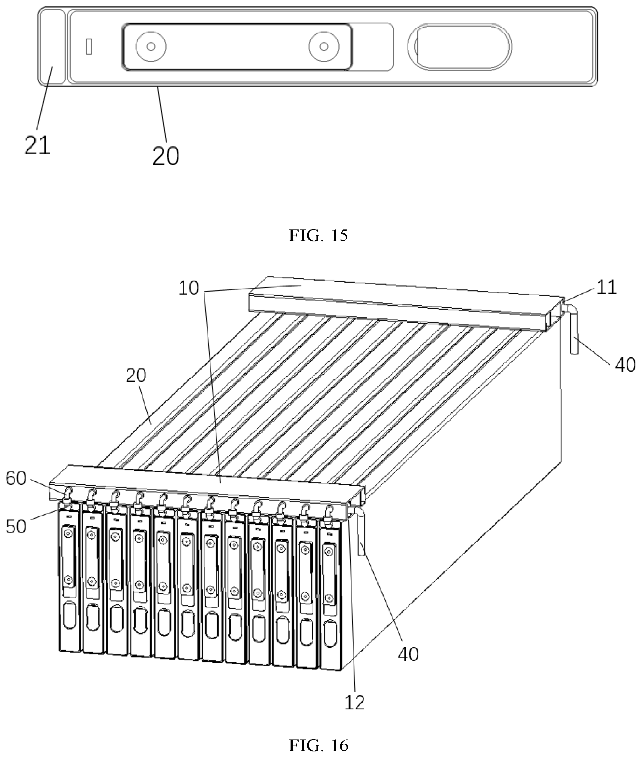

In this embodiment, as shown in FIG. 16, the battery cell heat exchange system is applied to a plurality of stacked battery cells, where large surfaces of the two adjacent battery cells are in contact with each other. Along a stacking direction of the battery cells, the battery cells are sequentially connected in series to form a battery module, and the battery module is assembled inside a housing to form a battery pack.

It should be noted that in this embodiment, the battery cells have structures such as long blades, short blades, or ordinary square shapes.

In this embodiment, as shown in FIG. 14 and FIG. 15, the battery cell shells 20 are arranged in one-to-one correspondence with the battery cells, each battery cell shell 20 is provided with a heat exchange channel 21 on at least one side in a first direction D1 (the first direction D1 is a height direction of the battery cell shell 20 from the perspective of FIG. 14), and a heat exchange medium can circulate in the heat exchange channel 21 to achieve heat exchange. Specifically, because terminal posts of the battery cells usually generate a large amount of heat, at least some heat exchange channels 21 are arranged on sides close to the terminal posts of the battery cells, thereby achieving an optimal heat exchange effect.

It should be noted that when the battery cell is provided with one terminal post only at one end in its length direction, one or two heat exchange channels 21 may be designed, but the battery cell shell 20 should be provided with the heat exchange channel 21 on the side close to the terminal post in the first direction D1. When the battery cell is provided with two terminal posts at one end in its length direction, in a preferred implementation, the battery cell shell 20 is provided with one heat exchange channel 21 at each of two ends in the first direction D1, to ensure the heat exchange effect.

More specifically, in this embodiment, as shown in FIG. 14 to FIG. 16, the heat exchange channel 21 is arranged at one end of the battery cell shell 20 in a width direction and close to the terminal post, that is, the heat exchange channel 21 is arranged between two large surfaces of the battery cell, so that the plurality of heat exchange channels 21 are arranged along the stacking direction of the battery cells. The heat exchange channel 21 runs through both ends of the battery cell shell 20 in the length direction, so that the length of the heat exchange channel 21 is maximized, thereby increasing heat exchange duration between the heat exchange medium and the battery cell, and achieving sufficient heat exchange to improve the heat exchange effect.

In this embodiment, the heat exchange channel 21 is arranged at a top of the battery cell shell 20 from the perspective shown in FIG. 16.

It should be noted that the heat exchange channel 21 on the side of the battery cell shell 20 can be integrally formed with the battery cell shell 20, for example, by extruding an aluminum profile, to lower costs.

In a preferred implementation, as shown in FIG. 14 and FIG. 15, the heat exchange channel 21 extends to both ends of the battery cell shell 20 in the stacking direction of the battery cells, i.e., the heat exchange channel 21 completely covers side walls of the battery cell shell 20 in the stacking direction of the battery cells, so that the contact area between the heat exchange medium and the battery cell is maximized to increase heat exchange efficiency, thereby improving the heat exchange effect. In this embodiment, a cross-section of the heat exchange channel 21 (i.e., a cross-section perpendicular to the length direction of the heat exchange channel 21) is formed as a rectangular structure, which makes the structure of the battery cell heat exchange system regular for easy assembly and avoids interference with the stacked battery cells. It should be noted that the cross-sectional area of the heat exchange channel 21 may be designed according to heat exchange requirements.

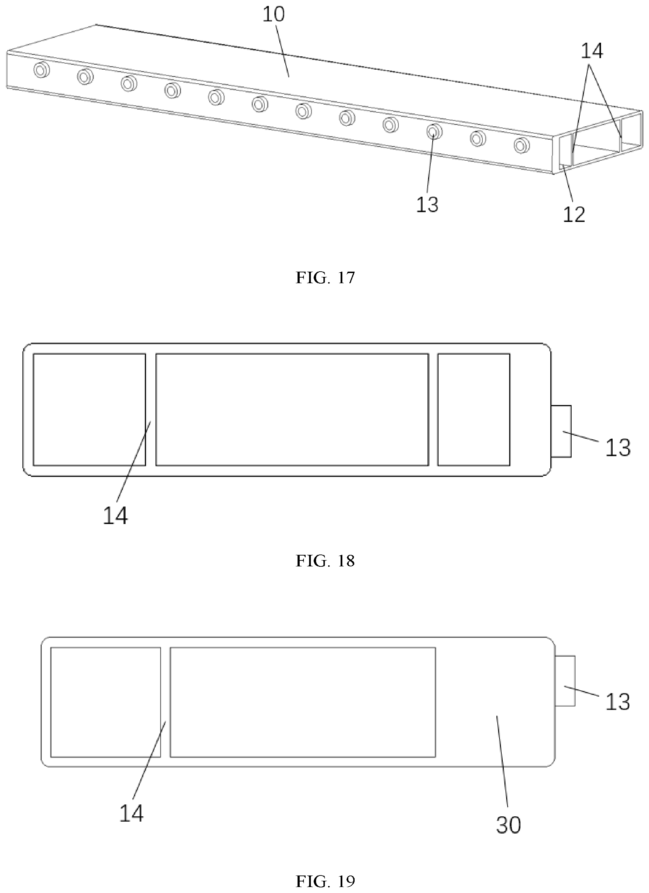

In this embodiment, as shown in FIG. 16 and FIG. 17, the flow distributor 10 is formed with flow distribution holes 13 in one-to-one correspondence with the heat exchange channels 21; two flow distributors 10 are provided on a side of the battery cell shell 20 with the heat exchange channel 21, and the two flow distributors 10 are respectively located at the two ends of the heat exchange channel 21 in the length direction, where one flow distributor 10 is formed with a second inlet portion 11 connected to each flow distribution hole 13 on the flow distributor 10, the heat exchange medium can flow into the flow distributor 10 from the second inlet portion 11 and be distributed to each flow distribution hole 13 via the flow distributor 10, so that the heat exchange medium enters each heat exchange channel 21; the other flow distributor 10 is formed with a second outlet portion 12 connected to each flow distribution hole 13 on the flow distributor 10, and the heat exchange medium that completes heat exchange flows into the corresponding flow distribution holes 13 from the other end of the heat exchange channel 21 and is collected by the flow distributor 10 before flowing out from the second outlet portion 12.

It should be noted that when the battery cell shell 20 is provided with the heat exchange channel 21 only on one side in the first direction D1, two flow distributors 10 are designed, and the two flow distributors 10 are respectively located at both ends of the heat exchange channel 21 in the length direction; when the battery cell shell 20 is provided with the heat exchange channels 21 on both sides in the first direction D1, that is, when two heat exchange channels 21 are provided, a total of four flow distributors 10 are designed, and every two flow distributors 10 are formed as a group and connected to one heat exchange channel 21, that is, the battery cell shell 20 is provided with two flow distributors 10 on both sides in the first direction D1.

Specifically, in this embodiment, as shown in FIG. 16, the flow distributor 10 can be assembled and connected with the battery cell shell 20, so that the heat exchange channel 21 is arranged between the battery cell and the flow distributor 10. Such design ensures that the flow distributor 10 is firmly fixed, and can shorten the distance between the flow distribution hole 13 and the heat exchange channel 21, allowing the heat exchange medium to circulate quickly.

More specifically, in this embodiment, as shown in FIG. 16 and FIG. 17, the flow distributor 10 is formed as a tubular structure extending along the stacking direction of the battery cells. A cross-section of the tubular structure is preferably rectangular, to facilitate the assembly and connection of the flow distributor 10 with the battery cell shell 20. The flow distributor 10 can be fixed to the battery cell shell 20 by bolt fastening.

It should be noted that in this embodiment, the term "connected" merely indicates that the heat exchange medium flows through two components, and the two components may be or not be in direct contact connection.

Moreover, in this embodiment, as shown in FIG. 17, the plurality of flow distribution holes 13 are spaced along the length direction of the flow distributor 10, so that each flow distribution hole 13 can be in one-to-one correspondence with an end of the heat exchange channel 21. The flow distribution hole 13 may be formed as a hole-shaped structure formed on a side wall of the tubular structure of the flow distributor 10, so that all the flow distribution holes 13 on each flow distributor 10 are connected to each other, making the structure of the flow distributor 10 simpler and the flow distribution more uniform.

In a preferred implementation, as shown in FIG. 17 and FIG. 18, the flow distribution hole 13 protrudes outward from the side wall of the flow distributor 10, to facilitate its sealing connection with an adapter 60 described below, thereby improving the sealing property of the battery cell heat exchange system.

In this embodiment, the positions of the second inlet portion 11 and the second outlet portion 12 can be arranged according to the structure of the battery pack. In an optional implementation, as shown in FIG. 16, the second inlet portion 11 and the second outlet portion 12 are arranged on the same side of the battery cell. However, in another optional implementation, the second inlet portion 11 and the second outlet portion 12 are arranged on both sides of the battery cell.

Moreover, in this embodiment, as shown in FIG. 16 and FIG. 17, a reinforcing portion 14 is provided inside the flow distributor 10, and the reinforcing portion 14 is formed as a plate-like structure that extends along the stacking direction of the battery cells and is arranged at an angle with the battery cell shell 20. Such design can improve the structural strength of the flow distributor 10, increase the resistance of the flow distributor 10 against deformation under external force, and thus protect the battery cell and increase the strength of the battery pack. One or more reinforcing portions 14 may be provided. When a plurality of reinforcing portions 14 are provided, the reinforcing portions 14 are spaced along the length direction of the battery cell.

It should be noted that in this embodiment, the reinforcing portion 14 of the plate-like structure divides the interior of the flow distributor 10 into a plurality of independent cavities, an outer wall of one of the cavities is provided with the flow distribution hole 13, no heat exchange medium flows in the remaining the cavities except the cavity provided with the flow distribution hole 13, and the remaining cavities can be used for wiring or fixing the battery module.

It should be further noted that among the plurality of independent cavities, side walls of the cavity provided with the flow distribution hole 13 are preferably thickened, to avoid the impact of forming the flow distribution hole 13 on the strength of the cavity.

Furthermore, in this embodiment, as shown in FIG. 18 and FIG. 19, the battery cell heat exchange system further includes a sealing element 30, the sealing element 30 is in sealing connection with an end of the flow distributor 10 in an extension direction, and the sealing element 30 is adapted to the flow distributor 10 in shape to ensure sealing. Specifically, the sealing element 30 is arranged at an end away from the second inlet portion 11 or the second outlet portion 12, so that the heat exchange medium entering the flow distributor 10 from the second inlet portion 11 can flow out only from each flow distribution hole 13, or the heat exchange medium flowing into the flow distribution hole 13 from the heat exchange channel 21 can flow out only from the second outlet portion 12, thereby avoiding leakage of the heat exchange medium. In this embodiment, the sealing element 30 may be formed as a sheet-like structure, such as an aluminum sheet, and welded to the end of the flow distributor 10 by laser to form a sealed connection, or the sealing element 30 may be integrally formed with the flow distributor 10, thereby reducing assembly steps and shortening assembly time.

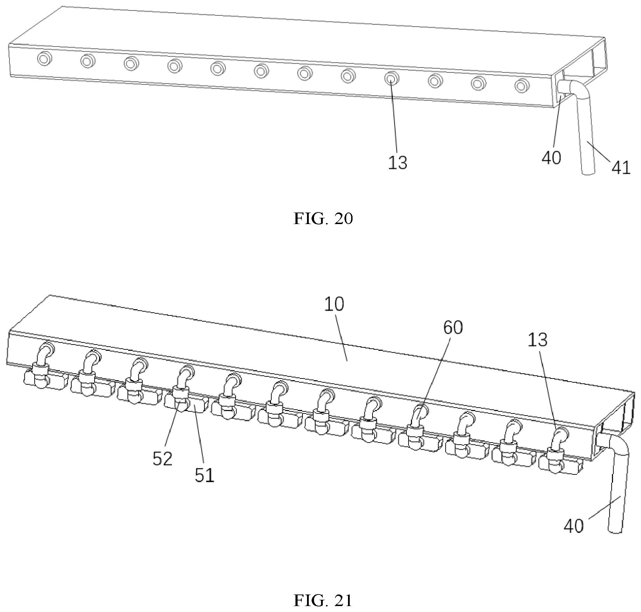

Furthermore, in this embodiment, as shown in FIG. 20, the battery cell heat exchange system further includes two flow guides 40, and the flow guides 40 are in sealing connection with the second inlet portion 11 and the second outlet portion 12 respectively, facilitating the introduction of the heat exchange medium into the flow distributor 10 or the delivery of the heat exchange medium to a desired position, to meet the layout requirements of the battery cell heat exchange system. Specifically, a protruding flow guide tube 41 is formed on a side of the flow guide 40 that faces away from the second inlet portion 11 or the second outlet portion 12, the flow guide tube 41 may be formed as a bent tubular structure, and the flow guide tube 41 is connected to the flow distribution hole 13, so that the heat exchange medium in the flow guide tube 41 can flow to the flow distribution hole 13, or the heat exchange medium flowing into the flow distributor 10 from the flow distribution hole 13 can flow to the flow guide tube 41.

It should be noted that the flow guide 40 may be welded or threaded with the flow distributor 10, or the flow guide 40 and the flow distributor 10 are integrally formed.

Due to the spatial distance between the battery cell shell 20 and the flow distributor 10, the flow distribution hole 13 cannot be directly connected to the heat exchange channel 21. In this embodiment, as shown in FIG. 21 to FIG. 23, the battery cell heat exchange system further includes connectors 50, and the connectors 50 are arranged at both ends of the heat exchange channel 21 in the length direction; the connector 50 includes a sealing portion 51 that conforms to an opening of the heat exchange channel 21, and a connection portion 52 arranged on a side of the sealing portion 51 that faces away from the heat exchange channel 21.

Specifically, in this embodiment, as shown in FIG. 21 to FIG. 23, the sealing portions 51 may be formed as sheet-like or lug-like structures, as long as they can block both ends of the heat exchange channel 21 to avoid leakage; the connection portion 52 is formed as a tubular structure that runs through a main body of the sealing portion 51, and the connection portion 52 can be connected to the flow distribution hole 13. The connection portion 52 may be, but is not limited to, a buckle type pipe joint, a quick plug, or a micro quick twist joint. The main body of the sealing portion 51 is formed with a through hole for assembling the connection portion 52. The connection portion 52 may be assembled with the sealing portion 51 by threaded connection, welding, or sealing ring sealing fixation, or the sealing portion 51 and the connection portion 52 are integrally formed.

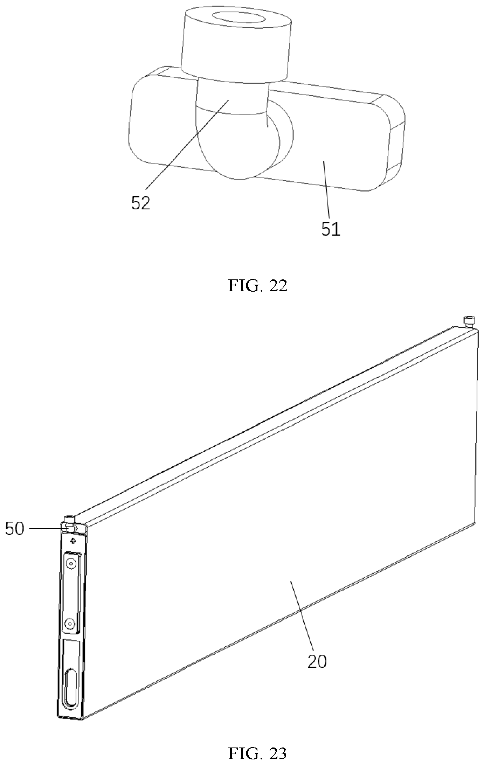

In this embodiment, as shown in FIG. 22, the connection portion 52 is formed as a bent tube structure extending towards the flow distributor 10. The sealing portion 51 may be an aluminum sheet.

In order to avoid assembly problems between the connector 50 and the flow distributor 10 due to manufacturing tolerances, in this embodiment, as shown in FIG. 16 and FIG. 21, the battery cell heat exchange system further includes an adapter 60, and two ends of the adapter 60 are connected to the connection portion 52 and the flow distribution hole 13 respectively. The adapter 60 is formed as a flexible tubular structure, such as a hose, so that the adapter 60 can be bent into a desired shape, to ensure smooth connection between the connector 50 and the flow distributor 10.

In one implementation of this embodiment, the heat exchange medium is a liquid or gas cooling medium, so that the battery cell heat exchange system is formed as a cooling system, which can quickly cool the terminal post of the battery cell where a large amount of heat is generated. In another implementation, the heat exchange medium is a liquid or gas heating medium, so that the battery cell heat exchange system is formed as a heating system to avoid affecting the capacity and lifespan of the battery in low-temperature environments, such as winter environments.

In summary, according to the battery cell heat exchange system of this embodiment, the heat exchange channel corresponding to the terminal post is added to each battery cell shell, thereby improving heat exchange efficiency and effectiveness, and providing the independent heat exchange channel for each battery cell; the flow distributor with the second inlet portion can distribute and deliver the heat exchange medium to each heat exchange channel, and the flow distributor with the second outlet portion can collect and discharge the heat exchange medium after heat exchange in each heat exchange channel, thereby overcoming the problem of gradually increasing coolant temperature, better maintaining a thermal balance between battery cells, and improving the safety and thermal stability of a power battery accordingly.

A second aspect of the present application provides a power battery, including the battery cell heat exchange system described in the first embodiment and/or the second embodiment, where each battery cell has an independent heat exchange channel, thereby improving heat exchange effectiveness and efficiency, overcoming the problem of gradually increasing coolant temperature in conventional liquid cooling methods, better maintaining a thermal balance between battery cells, and improving the safety and thermal stability of the power battery accordingly.

Finally, it should be noted that the above embodiments are merely specific implementations of the present application and are used to illustrate, but not to limit, the technical solutions of the present application. The scope of protection of the present application is not limited to this. Although the present application is described in detail with reference to the foregoing embodiments, a person of ordinary skill in the art should understand that any skilled person familiar with the technical field can still modify or readily conceive of changes to the technical solutions described in the foregoing embodiments, or equivalently substitute some of the technical features, within the technical scope disclosed in the present application. These modifications, changes, or substitutions do not deviate from the essences of the corresponding technical solutions in the embodiments of the present application, but fall within the scope of protection of the present application. Therefore, the scope of protection of the present application should be subject to the scope of protection of the claims.

### Industrial Applicability

The battery cell heat exchange system of the present application has a simple structure and low cost. By designing the heat exchange channel corresponding to the side of the battery cell on the battery cell shell, the heat exchange medium can flow on the side of the battery cell, improving heat exchange effectiveness and efficiency. The battery cell shells are arranged in one-to-one correspondence with the battery cells, so that the heat exchange channel of each battery cell is independent. The heat exchange medium is divided into a plurality of branches from the first pipeline and enters different heat exchange channels, thereby overcoming the problem of gradually increasing coolant temperature in conventional liquid cooling methods, better maintaining the thermal balance between the battery cells, and improving the safety and thermal stability of a power battery.

## Claims

1. A battery cell heat exchange system, applied to a plurality of stacked battery cells, wherein the battery cell heat exchange system comprises:
battery cell shells arranged in one-to-one correspondence with the battery cells, wherein the battery cell shell has a heat exchange channel arranged on at least one side of the battery cell, for introducing a heat exchange medium, and along a flow direction of the heat exchange medium, two ends of the heat exchange channel are formed as a first inlet portion and a first outlet portion; and
a collection pipeline comprising a first pipeline and a second pipeline, wherein the first pipeline is connected to each first inlet portion, and the second pipeline is connected to each first outlet portion.

2. The battery cell heat exchange system as claimed in claim 1, wherein the heat exchange channel is arranged on a large surface side of the corresponding battery cell of the battery cell shell.

3. The battery cell heat exchange system as claimed in claim 2, wherein the heat exchange channel is provided on at least one side of the battery cell shell, the first inlet portion and the first outlet portion are respectively arranged at both ends of the battery cell shell in a length direction, and the heat exchange channel extends to both ends of the battery cell shell in a first direction.

4. The battery cell heat exchange system as claimed in claim 1, wherein the battery cell heat exchange system further comprises:
sealing elements arranged at the first inlet portion and the first outlet portion, wherein the sealing element is formed with a recessed communication cavity on a side facing the heat exchange channel, an outer wall of the sealing element is formed with a protruding connection portion that is connected to the communication cavity, and the collection pipeline is connected to the connection portion.

5. The battery cell heat exchange system as claimed in claim 4, wherein the connection portion is formed as a tubular structure, and an extension direction of the connection portion is the same as a stacking direction of the plurality of battery cells.

6. The battery cell heat exchange system as claimed in claim 4, wherein cover plates are provided on both sides of the battery cell, and the sealing element and the cover plate form a one-piece structure.

7. The battery cell heat exchange system as claimed in claim 4, wherein the battery cell heat exchange system further comprises:
a connecting component arranged between the two adjacent sealing elements located on the same side of the battery cell, wherein the connecting component is connected to the connection portion.

8. The battery cell heat exchange system as claimed in claim 1, wherein one end of the first pipeline is formed as a medium inlet, and one end of the second pipeline is formed as a medium outlet;
the medium inlet and the medium outlet are arranged on the same side of the stacked battery cells, or the medium inlet and the medium outlet are respectively arranged on both sides of the stacked battery cells; and
the heat exchange medium is a gas or liquid cooling medium, or the heat exchange medium is a gas or liquid heating medium.

9. The battery cell heat exchange system as claimed in claim 1, wherein a reinforcing member is provided inside the heat exchange channel, and the reinforcing member is arranged at an angle with a large surface of the battery cell.

10. The battery cell heat exchange system as claimed in claim 1, wherein the battery cell heat exchange system further comprises:
a thermal insulator arranged between the two adjacent battery cells; and/or
a heating element arranged between the two adjacent battery cells.

11. The battery cell heat exchange system as claimed in claim 1, wherein each battery cell shell is provided with a heat exchange channel on at least one side in a first direction, for introducing a heat exchange medium; at least some heat exchange channels are arranged on sides close to terminal posts of the battery cells;
the first pipeline and the second pipeline are respectively formed as flow distributors, and any of the flow distributors is formed with flow distribution holes in one-to-one correspondence with the heat exchange channels; and
the two flow distributors are provided on a side of the battery cell shell with the heat exchange channel, and the two flow distributors are respectively located at the two ends of the heat exchange channel in the length direction, wherein one flow distributor is formed with a second inlet portion connected to each flow distribution hole on the flow distributor, for introducing the heat exchange medium; and the other flow distributor is formed with a second outlet portion connected to each flow distribution hole on the flow distributor, allowing the heat exchange medium to flow out.

12. The battery cell heat exchange system as claimed in claim 11, wherein the heat exchange channel runs through both ends of the battery cell shell in the length direction; and the heat exchange channel extends to both ends of the battery cell shell in the stacking direction of the battery cells.

13. The battery cell heat exchange system as claimed in claim 11, wherein the flow distributor is formed as a tubular structure extending along the stacking direction of the battery cells; and the plurality of flow distribution holes are spaced along a length direction of the flow distributor.

14. The battery cell heat exchange system as claimed in claim 11, wherein a reinforcing portion is provided inside the flow distributor, and the reinforcing portion is formed as a plate-like structure that extends along the stacking direction of the battery cells and is arranged at an angle with the battery cell shell.

15. The battery cell heat exchange system as claimed in claim 13, wherein the battery cell heat exchange system further comprises:
a sealing element connected to an end of the flow distributor in an extension direction, wherein the sealing element is arranged at an end away from the second inlet portion or the second outlet portion; and
the second inlet portion and the second outlet portion are arranged on the same side of the battery cell, or the second inlet portion and the second outlet portion are arranged on both sides of the battery cell.

16. The battery cell heat exchange system as claimed in claim 11, wherein the battery cell heat exchange system further comprises:
two flow guides in sealing connection with the second inlet portion and the second outlet portion respectively, wherein a protruding flow guide tube is formed on a side of the flow guide that faces away from the second inlet portion or the second outlet portion, and the flow guide tube is connected to the flow distribution hole.

17. The battery cell heat exchange system as claimed in claim 11, wherein the battery cell heat exchange system further comprises:
connectors arranged at both ends of the heat exchange channel in the length direction, wherein the connector comprises a sealing portion that conforms to an opening of the heat exchange channel, and a connection portion arranged on a side of the sealing portion that faces away from the heat exchange channel; the connection portion is formed as a tubular structure that runs through a main body of the sealing portion, and the connection portion can be connected to the flow distribution hole.

18. The battery cell heat exchange system as claimed in claim 17, wherein the battery cell heat exchange system further comprises:
an adapter formed as a flexible tubular structure, wherein two ends of the adapter are connected to the connection portion and the flow distribution hole respectively.

19. The battery cell heat exchange system as claimed in any one of claims 1 to 18, wherein the heat exchange medium is a liquid or gas cooling medium, or the heat exchange medium is a liquid or gas heating medium.

20. A power battery, comprising the battery cell heat exchange system as claimed in any one of claims 1 to 10 or the battery cell heat exchange system as claimed in any one of claims 11 to 19.
